# FASCICULE DE BREVET EUROPEEN

(11) **EP 3 390 800 B1**
(45) Date de publication et mention de la délivrance du brevet: **22.05.2019**
(21) Numéro de dépôt: 16825506.5
(22) Date de dépôt: 14.12.2016
(51) Int. Cl.: F02K 1/76, F15B 15/06

(54) **NACELLE POUR TURBORÉACTEUR D'AÉRONEF MUNIE D'UN ACTIONNEUR ROTO-LINÉAIRE HYDRAULIQUE D'INVERSEUR DE POUSSÉE ET DE TUYÈRE À SECTION VARIABLE**
GONDEL FÜR FLUGZEUGTURBODÜSENMOTOR, DER MIT EINEM HYDRAULISCHEN ROTOLINEAREN AKTUATOR EINES SCHUBUMKEHRERS UND EINER DÜSE MIT VERÄNDERLICHEM QUERSCHNITT AUSGESTATTET IST
NACELLE FOR AIRCRAFT TURBOJET ENGINE PROVIDED WITH A HYDRAULIC ROTO-LINEAR ACTUATOR OF A THRUST REVERSER AND A VARIABLE-AREA NOZZLE

(30) Priorité: 17.12.2015 FR 1562676
(43) Date de publication de la demande: 24.10.2018
(73) Titulaire: Safran Nacelles, 76700 Gonfreville-l'Orcher (FR)
(72) Inventeur: LE COQ, Vincent, 76700 Gonfreville L'Orcher (FR)
(74) Mandataire: Gaillarde, Frédéric F. Ch.
(86) Numéro de dépôt international: PCT/FR2016/053408
(87) Numéro de publication internationale: WO 2017/103464

(56) Documents cités:
- GB-A- 2 446 441
- GB-A- 2 449 281
- JP-U- S 633 502
- JP-U- S60 110 704
- US-A1- 2006 272 492
- US-A1- 2012 137 654

## Description

La présente invention concerne le domaine des actionneurs de capots d'inverseurs de poussée pour nacelle de turboréacteur d'aéronef, et des actionneurs de panneaux mobiles de tuyère secondaire à section variable de nacelle, et se rapporte plus précisément à une nacelle pour turboréacteur d'aéronef comportant un système d'actionnement d'actionneurs hydrauliques mutualisés permettant un actionnement séquentiel de tels capots d'inverseur et panneaux de tuyère.

Un avion est mû par plusieurs turboréacteurs logés chacun dans une nacelle abritant également un ensemble de dispositifs d'actionnement annexes lié à son fonctionnement et assurant diverses fonctions lorsque le turboréacteur est en fonctionnement ou à l'arrêt.

Ces dispositifs d'actionnement annexes comprennent, notamment, un système mécanique d'inversion de poussée et un système de tuyère variable.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur permet de renvoyer vers l'avant de la nacelle tout ou partie des flux de gaz éjectés par le turboréacteur, générant de ce fait une contre-poussée qui vient s'ajouter au freinage des roues de l'avion. Pour ce faire, un inverseur de poussée comprend de part et d'autre de la nacelle un capot mobile déplaçable entre, d'une part, une position déployée qui ouvre dans la nacelle un passage destiné au flux dévié lors d'une phase de freinage, et d'autre part, une position d'escamotage qui ferme ce passage lors du fonctionnement normal du turboréacteur ou lorsque l'avion est à l'arrêt.

Les capots mobiles peuvent remplir une fonction de déviation ou simplement d'activation d'autres moyens de déviation.

Dans le cas d'un inverseur à grilles de déviation, la réorientation du flux d'air est effectuée par des grilles de déviation, associées à des volets d'inversion qui bloquent une partie de la veine de circulation d'air, le capot n'ayant qu'une simple fonction de coulissage visant à découvrir ou recouvrir ces grilles de déviation.

Par ailleurs, outre sa fonction d'inversion de poussée, le capot coulissant appartient à la section arrière et présente un côté aval formant la tuyère d'éjection visant à canaliser l'éjection des flux d'air. Dans le cas d'un inverseur à grilles, les capots coulissants sont mûs par des actionneurs synchronisés entre eux et équipés de verrous de retenu de position fermée en vol. Dans le cas d'un tel inverseur à commande hydraulique, les actionneurs hydrauliques intègrent des vis internes qui tournent à mesure que leur tige hydraulique se translate. Les tiges sont bloquées en rotation par des chapes de liaison au capot mobile, ainsi le déplacement s'effectue par une translation pure des tiges de vérin. Un dispositif de renvoi et de liaison par des câbles flexibles à nappe d'enroulement multiples viennent relier les vis d'actionneurs entre eux au niveau de la structure fixe. Le mouvement de translation des actionneurs est ainsi synchronisé, à la raideur près des câbles flexibles qui asservissent une rotation homogène des vis. La section optimale de la tuyère d'éjection peut être adaptée en fonction des différentes phases de vol, à savoir les phases de décollage, de montée, de croisière, de descente.

Il convient de noter que les phases de fonctionnement de la tuyère variable et de l'inverseur de poussée sont distinctes, la tuyère variable n'étant pas actionnée lorsque l'inverseur est activé à l'atterrissage.

Parmi les différents modes de réalisation de tuyères d'éjection connues de l'art antérieur, il est notamment connu de réaliser la variation de section de sortie de la tuyère à partir d'un ou plusieurs éléments mobiles, tels que des volets pivotants.

Afin d'actionner la tuyère adaptative indépendamment des moyens d'inversion de poussée, en particulier lors du décollage, chaque partie mobile (capot d'inverseur/volets de tuyère) est mue par un ensemble d'actionneurs distincts pour ces deux mouvements. C'est notamment le cas du système d'actionnement décrit dans le document GB 2 449 281, dans lequel l'actionnement de la tuyère est réalisé par un actionneur présentant une tige télescopique déplaçable en translation par l'intermédiaire d'un système vis-écrou et dont la vis est entraînée en rotation par un moteur solidaire d'une partie fixe de la nacelle, le capot d'inverseur étant quant à lui entraîné en translation par un ensemble d'actionneurs indépendants. Un inconvénient de cette réalisation est d'avoir des moyens de contrôles d'activation dupliqués entre le mouvement de l'inverseur et le mouvement de l'actionnement de tuyère. De plus, la mise à disposition de l'énergie et des mesures du capot ou des volets de tuyère variable est rendue difficile car elle chemine au travers du capot d'inverseur, qui devra lui-même se déplacer à l'atterrissage.

Afin d'alléger la masse de la nacelle, il a été proposé d'utiliser un unique actionneur comprenant des moyens de verrouillage/déverrouillage appropriés de la tuyère adaptative sur le capot coulissant d'inverseur, permettant ainsi un déplacement séquencé du capot d'inverseur et de la tuyère, avec un unique actionneur.

Le document GB 2 446 441 décrit une telle architecture de commande pour actionner à la fois un dispositif d'inversion de poussée associé à un dispositif de tuyère variable, et prévoir pour ce faire un actionneur comprenant deux pistons concentriques mobiles en translation, le premier piston étant en prise avec le capot d'inverseur, et le deuxième piston étant relié à la tuyère, chaque piston étant commandé hydrauliquement indépendamment l'un de l'autre. Le document US 2012/0137654 A1 divulgue une architecture de commande pour actionner un dispositif d'inversion de poussée associé à un dispositif de tuyère variable, et prévoit pour ce faire un actionneur comprenant deux pistons concentriques.

Cette solution se révèle particulièrement complexe de réalisation. De plus, dans cette solution de double translation, le guidage de deux éléments mobiles pose des problèmes de rattrapage de degrés de liberté radiaux en raison du jeu relatif du capot d'inverseur vis-à-vis de ses rails de guidage et en raison des déformations aérodynamiques.

La présente invention vise à résoudre les inconvénients de l'art antérieur, et concerne pour ce faire une nacelle pour turboréacteur d'aéronef, comprenant :
- un inverseur de poussée, comprenant :
   - un capot déplaçable entre une position déployée qui ouvre dans la nacelle un passage destiné à un flux d'air dévié et une position d'escamotage qui ferme ce passage ;
   - une structure fixe relativement audit capot ;
- une tuyère secondaire à section variable comprenant une pluralité de panneaux ou volets mobiles en rotation,
- une pluralité d'actionneurs hydrauliques pour actionnement séquencé dudit capot et desdits panneaux, comprenant :
   - un corps monté sur ladite structure fixe, et
   - une tige montée dans ledit corps et reliée, d'une part, audit capot et, d'autre part, auxdits panneaux par l'intermédiaire d'un dispositif de renvoi de mouvement de l'actionneur au panneau ;
- au moins un système d'actionnement alimentant ledit actionneur, comprenant un dispositif de commande hydraulique dudit actionneur adapté pour commander le déplacement de la tige de l'actionneur ;
ledit actionneur comprenant des moyens pour déplacer la tige alternativement en translation par rapport audit corps, de façon à entraîner la translation du capot d'inverseur de poussée, ou en rotation par rapport audit corps, de façon à entraîner la rotation du panneau ou volet de tuyère secondaire.

Ainsi, grâce à la présente invention, les mouvements et organes de verrouillage sont similaires à un système d'inverseur conventionnel lorsque l'inverseur est commandé.

De plus la rotation déportée des vis pour orienter les panneaux ou volets de tuyère secondaire ne nécessite pas de liaison glissière extérieure à l'actionneur.

Encore, l'alimentation hydraulique pour la rotation et les moyens de mesure sont directement renvoyés dans le corps fixe du vérin, immobile par rapport à la structure fixe de la nacelle. Il n'est donc pas nécessaire d'utiliser des dispositifs complexes de stockage de course ou de sur-longueur, comme c'est le cas dans l'art antérieur.

Enfin la liaison cinématique entre la tige de l'actionneur et le capot d'inverseur consiste d'une part en un blocage en translation et d'autre part en un mouvement de rotation fixe à part de ce point. Il n'est donc pas nécessaire d'utiliser de dispositif de reprise de jeu relatif supplémentaire lors des mouvements du capot d'inverseur en vol induits par la variation de la pression du flux du turboréacteur.

Selon des caractéristiques optionnelles de la nacelle de l'invention :
- l'actionneur comprend des moyens adaptés pour renvoyer le mouvement de translation et de rotation de la tige dudit actionneur à un actionneur externe audit actionneur, de façon synchronisée ;
- les moyens pour déplacer la tige en rotation comprennent :
   - une rainure longitudinale agencée à l'intérieur de la tige ;
   - un axe interne rotatif, bloqué en translation par rapport au corps, et comprenant un coulisseau engageant ladite rainure ;
   - des moyens de mise en rotation dudit axe interne ;
- les moyens de mise en rotation de l'axe interne comprennent :
   - un piston rotatif, en prise avec ledit axe interne ;
   - des moyens de mise en rotation dudit piston ;
- les moyens de mise en rotation du piston comprennent :
   - un premier ensemble de dentures, agencées à l'extérieur du piston ;
   - un ensemble de dentures, agencées à l'intérieur du corps, et en prise avec les dentures du piston ;
   - une pluralité d'orifices CW et CCW d'introduction d'un fluide, agencés dans ledit corps, de part et d'autre dudit piston,

le piston étant en prise avec ledit axe interne grâce à un deuxième ensemble de dentures, agencées à l'intérieur du piston, et en prise avec un ensemble de dentures, agencées à l'extérieur de l'axe interne ;
- les dentures sont des dentures hélicoïdales à pas simples ou multiples ;
- les dentures sont des dentures hélicoïdales à pas inversé.
- l'actionneur comprend en outre un ressort agencé pour s'opposer au déplacement du piston selon un des sens de déplacement dudit piston ;
- les moyens pour renvoyer le mouvement de translation et de rotation de la tige de l'actionneur, à un actionneur externe audit actionneur, comprennent :
   - une vis de synchronisation, comprenant un ensemble de dentures, agencées à l'extérieur de ladite vis ;
   - un écrou, monté à l'intérieur de la tige, et en prise avec l'ensemble de dentures de ladite vis ;
   - un système roue et vis sans fin adapté pour recevoir un système d'arbre flexible destiné à relier le système roue et vis sans fin de l'actionneur à un système roue et vis sans fin dudit dispositif externe audit actionneur ;
   - un ensemble de paliers rotatifs, supportant ladite vis, lesdits paliers étant agencés de part et d'autre dudit système roue et vis sans fin, de façon à bloquer en translation la vis de synchronisation par rapport au corps de l'actionneur.
- le système d'actionnement comprend une alimentation hydraulique doublée par des circuits d'alimentation hydraulique et des unités de pilotage alimentant des actionneurs adjacents d'un capot d'inverseur, pour entraîner la rotation de la tige de l'actionneur ;
- les unités de pilotage comprennent une servovalve à trois voies alimentant le corps de l'actionneur par l'orifice CW et une vanne d'isolation alimentant le corps de l'actionneur par l'orifice CCW ;
- alternativement, les unités de pilotage sont équipées de servovalve à quatre voies ;
- les unités de pilotage peuvent en outre être équipées d'électrovannes « tout ou rien » aptes à pressuriser l'actionneur via l'orifice CW ou l'orifice CCW ;
- le système d'actionnement comprend au moins une soupape antichoc de sécurité, permettant de décharger les pressions induites par des efforts indésirables des panneaux ou volets de tuyère ;
- la nacelle comprend un arbre flexible relié entre un premier actionneur du capot d'inverseur, et un deuxième actionneur dudit capot, adjacent audit premier actionneur, agencé pour synchroniser le mouvement de translation et de rotation de la tige du premier actionneur avec celui du deuxième actionneur.
- la nacelle comprend avantageusement un arbre flexible complémentaire reliant :
   - le dispositif de renvoi de mouvement du premier actionneur au panneau de tuyère, et
   - le dispositif de renvoi de mouvement du deuxième actionneur au panneau de tuyère,
ledit arbre flexible complémentaire étant agencé pour synchroniser le mouvement du dispositif de renvoi de mouvement avec celui du dispositif de renvoi de mouvement.

D'autres caractéristiques, buts et avantages de la présente invention apparaîtront à la lecture de la description qui va suivre et à l'examen des figures ci-annexées dans lesquelles :
- la figure 1 illustre l'actionneur selon l'invention représenté en position rétractée, relié à un panneau de tuyère à section variable d'une nacelle de turboréacteur ;
- les figures 2 à 4 illustrent le fonctionnement de l'actionneur de la figure 1, la figure 2 représentant l'actionneur dans une position identique à celle représenté à la figure 1, la figure 3 étant une vue similaire à celle de la figure 1, dans une position selon laquelle la tige a subi une rotation et la figure 4 étant une vue similaire à celle de la figure 1, dans une position selon laquelle la tige de l'actionneur a été étirée ;
- la figure 5 représente un dispositif de commande hydraulique alimentant un ensemble d'actionneurs de l'invention.

Sur l'ensemble des figures, des références identiques ou analogues représentent des organes ou ensembles d'organes identiques ou analogues.

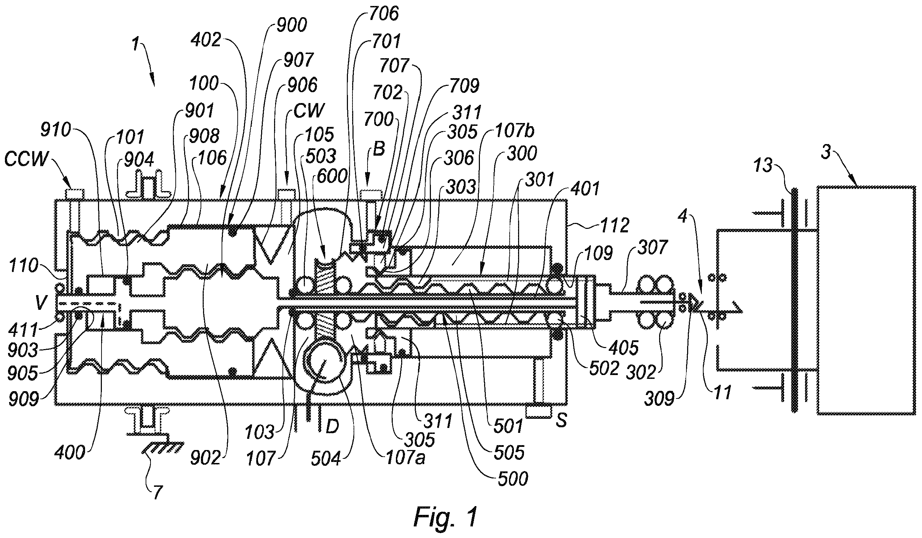

On se réfère à la figure 1, illustrant un actionneur 1 selon l'invention, représenté en position rétractée.

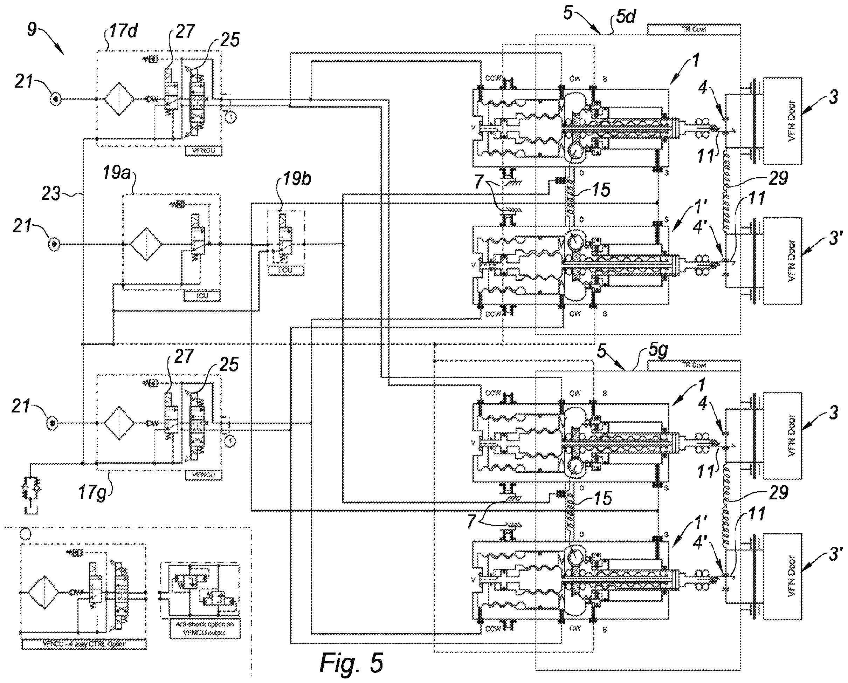

L'actionneur qui est représenté à la figure 1 est relié en sa partie aval à un panneau 3 de tuyère à section variable d'une nacelle de turboréacteur, par l'intermédiaire d'un dispositif de renvoi de mouvement 4. L'actionneur 1 est destiné à être d'une part relié au panneau 3 de tuyère, et d'autre part à un capot 5 d'inverseur (visible à la figure 5). A noter que dans la présente demande, l'amont et l'aval sont définis par rapport au sens d'écoulement de l'air dans l'ensemble propulsif en fonctionnement jet direct, l'entrée d'air étant située en amont par rapport à la tuyère d'éjection, située en aval de la nacelle.

L'actionneur 1 comprend un corps 100 typiquement cylindrique. Le corps 100 est relié à une structure fixe 7 d'un inverseur de poussée. La structure fixe 7 de l'inverseur de poussée peut désigner un cadre avant de l'inverseur de poussée ou toute autre partie fixe de l'inverseur, relativement au capot mobile translatant de l'inverseur de poussée. La liaison entre le corps 100 et le cadre avant peut notamment être réalisée par l'intermédiaire d'un cardan (non représenté).

Le corps 100 peut être constitué par un ensemble unitaire, comme représenté sur la figure 1, ou peut en outre renfermer un cylindre assemblé fixement au corps, par exemple grâce à un système jonc/écrou, l'étanchéité entre le cylindre et le corps 100 étant réalisée par exemple grâce à un joint d'étanchéité statique.

Le corps 100 définit en sa partie interne une première cavité 105 et une deuxième cavité 107 fermées hermétiquement entre elles par exemple au moyen d'un joint dynamique 103 situé en partie aval de la première cavité 105. Le joint 103 peut être monté sur un axe interne rotatif 400 qui sera discuté dans la suite de la description.

La partie amont de la première cavité 105 est délimitée par une butée 110. La première cavité 105 présente deux orifices CW et CCW d'entrée d'un fluide sous pression lorsque l'actionneur 1 est relié à un dispositif de commande hydraulique, par exemple le dispositif de commande hydraulique 9 représenté à la figure 5 qui sera décrite dans la suite de la description. La cavité 105 est pourvue d'un ensemble de dentures 101. Les dentures 101 sont agencées à l'intérieur de la cavité 105, c'est-à-dire sur une paroi interne 106 de la cavité 105, sur une longueur pouvant sensiblement correspondre à la moitié de la longueur de cette cavité. Les dentures 101 peuvent être des dentures trapézoïdales.

La deuxième cavité 107 présente une première chambre 107a et une deuxième chambre 107b fermées hermétiquement entre elles au moyen d'un flasque 311 étanche fixé sur une tige 300 sensiblement concentrique à la cavité 107 et apte à être entraînée en translation ou en rotation selon l'invention, comme on va le voir dans la suite de la description. La deuxième cavité 107 du corps 100 présente une ouverture 109 agencée dans un retour axial 112 prévu au niveau d'une extrémité aval dudit corps 100. L'ouverture 109 est destinée au passage de la tige 300. Le retour axial 112 comprend un joint dynamique 113 qui assure l'étanchéité au niveau de la partie aval de la deuxième cavité 107 lorsque la tige 300 se déplace relativement à la cavité 107. La deuxième cavité 107 présente trois orifices B, D et S d'entrée d'un fluide sous pression lorsque l'actionneur 1 est relié au dispositif de commande hydraulique 9.

Selon l'invention, la tige 300 de l'actionneur est apte à être entraînée alternativement à la fois en translation et en rotation par rapport au corps 100, grâce à des moyens adaptés qui vont être décrits dans la suite de la description.

La tige 300 de l'actionneur 1 est logée en partie dans la deuxième cavité 107 du corps 100, l'extrémité de cette tige 300 traversant l'ouverture 109 du corps 100. La tige 300 de l'actionneur 1 comprend une extrémité aval 307 comprenant des moyens de liaison d'une part au capot 5 d'inverseur (représenté à la figure 5) et d'autre part au panneau 3 de tuyère. L'extrémité 307 de la tige 300 comprend à cet effet un palier rotatif 302 destiné à être fixé sur le capot 5 d'inverseur afin de permettre un déplacement en translation du capot lorsque la tige 300 se translate par rapport au corps 100 de l'actionneur. L'extrémité 307 de la tige 300 comporte également une denture terminale 309 destinée à être en prise avec une roue 11 tangente à la tige 300 et appartenant au dispositif de renvoi de mouvement 4, la roue 11 pouvant être en prise avec un système d'embiellages agencé pour permettre un déplacement en rotation du panneau 3 autour d'un axe de rotation 13 lorsque la tige 300 est entraînée en rotation autour de son axe longitudinal.

Comme précédemment évoqué, la tige 300 comporte un flasque 311 étanche fixé sur la tige 300, par exemple au niveau d'une extrémité amont de la tige 300. Le flasque 300 est conformé pour délimiter les première et deuxième chambre 107a et 107b de la deuxième cavité 107 du corps 100, et est adapté pour fermer hermétiquement ces première et deuxième chambre 107a et 107b. Le flasque 311 est à cet effet rendu étanche par exemple au moyen d'un joint dynamique 305. Le flasque comporte en outre une rampe 306 agencée de façon à ce qu'un ensemble de verrouillage à segments 700, stoppé en translation sur le corps 100 de l'actionneur, mais apte à de mouvoir radialement, qui autorise ou empêche la translation de la tige 300.

Le système de verrouillage à segments 700 comporte une coiffe de guidage 707. Le système de verrouillage à segments 700 comporte un ressort 706 permettant de pré-positionner automatiquement des segments 709 de façon à armer automatiquement une séquence de verrouillage en translation de la tige 300. La coiffe de guidage 707 comporte à cet effet un ensemble de joints dynamiques linéaires étagés 701, 702 afin que la coiffe puisse se déplacer sous pression contre le ressort 706.

La tige 300 comporte également en sa partie intérieure une ou plusieurs rainures 301 (deux sont représentées à la figure 1). Les rainures 301 sont par exemple profilées depuis l'extrémité aval d'un écrou 303 également monté à l'intérieur de la tige, jusqu'à une partie amont de l'extrémité 307 de la tige 300.

Les rainures 301 reçoivent des coulisseaux 405 assemblés rigidement à l'axe interne 400, par exemple au moyen d'une vis (non représentée) manoeuvrant dans chaque rainure 301 de la tige 300. Les coulisseaux 405 sont conformés pour autoriser un déplacement de la tige 300 en translation par rapport à l'axe interne 400.

L'axe interne 400 traverse tout le corps 100 de l'actionneur 1. L'axe interne 400 est bloqué en translation contre des paliers rotatif 411 venant buter contre la butée 110 du corps 100.

L'axe interne 400 comporte une tige 401 s'étendant sensiblement depuis les coulisseaux 405 jusqu'à une portion de l'axe 400 présentant un ensemble de dentures 402 agencées à l'extérieur de l'axe interne 400. L'axe interne 400 est apte à être entraîné en rotation par rapport au corps 100 de l'actionneur au moyen des dentures 402 de préférence trapézoïdales qui viennent en prise avec des dentures 902 d'un piston 900 rotatif. Bien sûr, tout autre système adapté pour mettre la tige 400 en rotation peut être envisagé à la place des dentures 402 qui viennent en prise avec les dentures 902 du piston 900 rotatif. Lorsque l'axe interne 400 est entraîné en rotation, les coulisseaux 405 de l'axe interne 400 qui engagent les rainures 301 profilées dans la partie intérieure de la tige 300 entraînent un mouvement de rotation de la tige 300. De même, tant que l'axe interne 400 n'est pas entraîné en rotation par le piston 900, qui peut être maintenu en butée du corps 100, soit par des ressorts 906, soit par la pressurisation de la première cavité 105 par l'orifice CW, l'axe interne 400 reste bloqué en rotation et les coulisseaux 405 de l'axe interne 400 empêchent ainsi toute rotation de la tige 300.

S'agissant du piston 900 rotatif, ce piston est logé dans la première cavité 105 du corps 100 de l'actionneur 1. Le piston 900 présente une ouverture 905 agencée dans un retour axial 909 prévu au niveau d'une extrémité amont du piston 900. L'ouverture 905 est destinée au passage de l'axe interne 400, pour à la fois permettre une liaison au palier rotatif 411, et également permettre une mesure de rotation de l'axe interne rotatif, donc du mouvement des panneaux ou volets de tuyère secondaire, nécessaire au système de régulation.

Le piston 900 comporte un ensemble de dentures 901 agencées à l'extérieur du piston, c'est-à-dire au niveau d'une paroi externe 908 du piston 900. Ces dentures 901 sont en prise avec l'ensemble de dentures 101 agencées à l'intérieur de la cavité 105 du corps 100. Les dentures 901 peuvent être des dentures hélicoïdales à pas simple ou multiples.

Le piston 900 comporte en outre un ensemble de dentures 902 agencées à l'intérieur du piston, au niveau d'une paroi interne 910 du piston 900. Les dentures 902 sont en prise avec l'ensemble de dentures 402 agencées à l'extérieur de l'axe interne 400. Les dentures 902 peuvent être des dentures trapézoïdales. Les dentures 902 présentent idéalement un pas différent et inverse de celui prévu pour les dentures 901.

Le piston 900 est représenté à la figure 1 contre la butée amont 101 du corps 100. Comme on va la voir dans la suite de la description, le piston 900 est animé d'un mouvement simultané de rotation et de translation de par le profil hélicoïdal des dentures 901 lorsque le piston 900 est soumis à une pression différentielle entre les orifices d'entrée CW et CCW.

Le déplacement du piston dans le corps 100 peut être maintenu en position équilibré grâce à un réglage de la pression différentielle du fluide qui entre dans la cavité 105 du corps 100 par les orifices CW et CCW. De façon complémentaire ou alternative au blocage du mouvement du piston par réglage de la pression différentielle, le déplacement du piston peut être bloqué à volonté en butée par l'effet du ressort 906 et/ou de la pressurisation uniquement dans l'orifice CW, pour plaquer le piston 900 en butée du corps 100 et ainsi immobiliser sa rotation.

D'autres types de dispositifs de blocage du piston peuvent être prévus, tels que des pions de blocage translatant ou des freins à commande électrique ou hydraulique à manque de pression (non représentés ici).

Un joint dynamique rotatif 903 est monté entre le piston 900 et l'axe interne 400, au niveau de l'ouverture 905 du piston 900. Un joint dynamique rotatif 907 est monté entre la paroi externe 908 du piston 900 et la paroi interne 106 de la cavité 105 du corps 100 pour séparer les deux pressions reliées aux orifices CW et CCW.

De même, un joint dynamique rotatif 904 peut être prévu entre la paroi interne 910 du piston et l'axe interne 400, afin de créer des sections différentielles entre les orifices CW et CCW, pour le contrôle.

Selon l'invention, l'actionneur 1 de l'invention est en outre équipé de moyens pour renvoyer le mouvement de translation et de rotation de la tige 300 de l'actionneur 1 à un dispositif externe audit actionneur, par exemple un actionneur 1' (visible à la figure 5) adjacent à l'actionneur 1 et utilisé pour mettre en mouvement le capot 5 d'inverseur. Comme connu de l'homme du métier, des actionneurs d'un même capot d'inverseur peuvent être synchronisés mécaniquement par des arbres flexibles 15 (visibles à la figure 5) communément désignés sous le terme « flexshaft » en terminologie anglo-saxonne.

Afin de renvoyer le mouvement de translation et de rotation de la tige 300 d'un actionneur 1 à un actionneur 1' (visible à la figure 5), l'arbre flexible 15 est piloté par un système roue et vis sans fin comprenant une roue 600 en prise avec une vis sans fin 504.

Selon l'invention, la roue 600 est traversée par une vis de synchronisation 500 comprenant une tige 505, portée d'une part par un ensemble de paliers 502 en partie aval de la tige 505, et d'autre part par un ensemble de paliers rotatifs 503 en partie amont de la tige 505. Les paliers 502 sont de préférence agencés à l'intérieur de la tige 300. La vis de synchronisation 500 est bloquée en translation par rapport au corps 100 de l'actionneur 1 grâce aux paliers rotatif 503, montés de part et d'autre de la roue 600. La tige 505 de la vis de synchronisation 500 est en outre traversée par l'axe interne 400, l'axe interne 400 pouvant tourner librement à l'intérieur de la vis de synchronisation 500.

La tige 505 de la vis de synchronisation 500 comporte un ensemble de dentures 501, agencées à l'extérieur de la tige 505 de ladite vis 500. Les dentures 501 peuvent être trapézoïdales. Les dentures 501 sont en prise avec l'écrou 303 monté à l'intérieur de la tige 300, de sorte qu'un mouvement de translation de la tige 300 entraîne via l'écrou 303 et les dentures 501 un déplacement de la vis de synchronisation 500 en rotation autour de son axe longitudinal. De même, lorsque la tige 300 est entraînée en rotation, la vis de synchronisation est elle aussi entraînée en rotation.

Un tel mouvement de rotation de la vis de synchronisation 500 entraîne un mouvement de rotation de la roue 600 grâce aux paliers rotatifs 503, la rotation de la roue 600 entraînant une rotation de la vis sans fin 504 qui engrène la roue 600.

Des arbres flexibles complémentaires 29 (visibles à la figure 5) peuvent être prévus pour synchroniser directement la rotation de la roue 11 du dispositif de renvoi de mouvement 4 en prise avec l'actionneur 1, avec une roue 11 du dispositif de renvoi de mouvement 4' en prise avec un actionneur adjacent 1', cela afin de permettre une redondance du passage d'effort en cas de panne de l'actionneur 1, une telle panne pouvant survenir notamment lors d'une rupture de l'arbre interne 400 de l'actionneur.

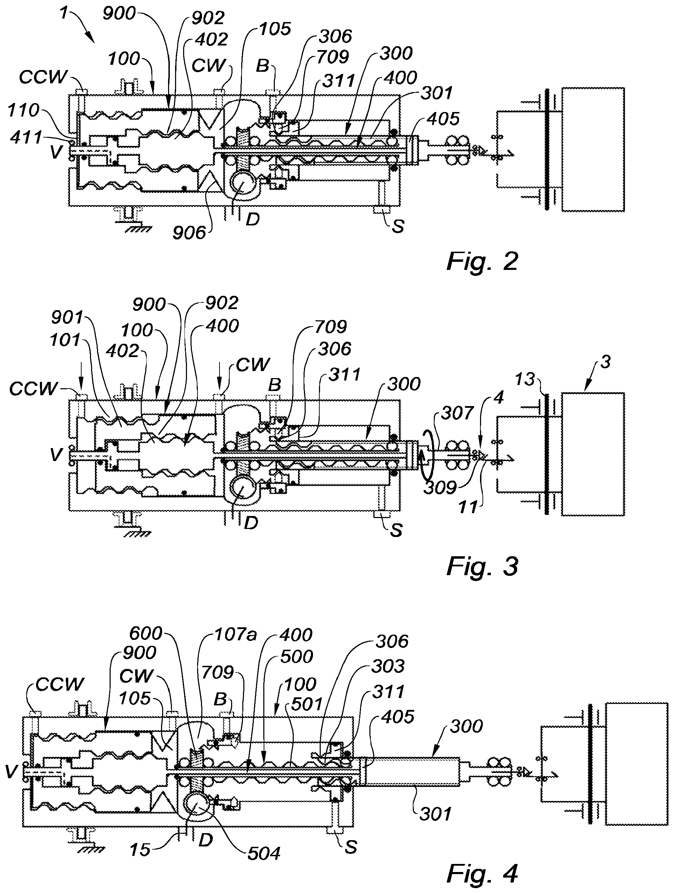

Le fonctionnement de l'actionneur 1 va à présent être décrit en référence aux figures 2 à 4 auxquelles on se réfère à présent.

L'actionneur 1 est au repos (figure 2), c'est-à-dire que les orifices d'entrée de fluide sous pression ne reçoivent pas de fluide sous pression. Les segments 709 sont en prise avec la rampe 306 du flasque 311 de la tige 300, ce qui bloque la translation de la tige 300 par rapport au corps 100 de l'actionneur. Le capot d'inverseur (non représenté) est ainsi bloqué en translation.

L'axe interne 400, qui est bloqué en translation contre les paliers 411 par l'effet du ressort 906 et/ou la pressurisation de la cavité CW, ces paliers venant buter contre la butée 110 du corps 100 de l'actionneur, est également bloqué en rotation en raison des dentures conjuguées 101, 901 et 402 et 902.

Lorsque l'axe 400 est bloqué en rotation, la rotation de la tige 300 est également empêchée grâce aux coulisseaux 405 de l'axe interne 400 qui engagent les rainures 301 de la tige 300.

On se réfère à présent à la figure 3 représentant l'actionneur 1 dans une position selon laquelle la tige 300 a subi une rotation.

Afin d'entraîner la tige 300 en rotation et par conséquent de commander le déplacement d'un panneau 3 de la tuyère variable par l'intermédiaire du dispositif de renvoi de mouvement 4, on règle la pression d'entrée du fluide dans la cavité 105 du corps 100, par les orifices CW et CCW reliés au dispositif de commande hydraulique 9 (représenté à la figure 5).

En introduisant du fluide sous pression par l'orifice CCW, le piston 900 est mis en translation et en rotation simultanée dans le corps 100 grâce aux dentures 901 en prise avec les dentures 101 du corps 100. Le mouvement de translation du piston 900 entraîne l'axe interne 400 en rotation par rapport au piston 900 grâce aux dentures 902 du piston 900 en prise avec les dentures 402 de l'axe interne 400, la translation le l'axe rotatif étant bloquée par le palier 411. Ainsi l'axe interne 400 tourne doublement par rapport au corps 100, car il tourne d'une part par rapport au piston 900 qui lui-même tourne par rapport au corps 100, et les deux rotations sont sommées algébriquement. En inversant les pas des dentures hélicoïdales conjuguées 101, 901 et 902, 402, on ajoute les deux rotations dans le même sens, pour une course du piston rotatif 900 minimisée. La rotation de l'axe interne 400 entraîne la rotation de la tige 300 grâce aux coulisseaux 405 de l'axe interne 400 qui engagent les rainures 301 de la tige 300. La tige 300 est quant à elle toujours maintenue bloquée en translation par rapport au corps 100 de l'actionneur grâce aux segments 709 qui engagent la rampe 306 du flasque 311 de la tige. La rotation de la rampe 106 peut soit glisser sur les segments 709, soit les segments 709 sont entraînés en rotation par friction et tournent sur une butée axiale rotative (non représentée sur la figure) par rapport au corps 100.

La rotation de la tige 300 de l'actionneur entraîne, via sa denture terminale 309 en son extrémité 307, la roue 11 du dispositif de renvoi de mouvement 4, tangente à ladite tige et en prise avec le système d'embiellages agencé pour permettre le déplacement en rotation du panneau 3 autour de son axe de rotation 13, de façon à régler la section de sortie de la nacelle.

Bien sûr, tout autre dispositif de renvoi de mouvement peut être utilisé pour transmettre le mouvement de rotation de la tige de l'actionneur au panneau de tuyère variable de façon à entraîner ce panneau en rotation.

La course du piston rotatif reste modeste de par le pas différentiel des dentures hélicoïdales 901 et 902 du piston 900, ce qui permet d'obtenir une rotation faible des panneaux 3 de tuyère (90 à 300° par exemple). Par ailleurs, la roue 11 du dispositif de renvoi de mouvement 4 et la denture terminale 309 de la vis 300 de l'actionneur permettent une rotation lente des panneaux 3 de tuyère, sous un couple significatif. L'axe interne 400 rotatif peut être équipé d'un système de détection de rotation (« RVDT » ou « resolver ») pour en mesurer la rotation précise. De cette façon, la mesure de position des panneaux 3 ou volets peut être utilisée dans une boucle d'asservissement en position angulaire qui module continuellement la pression dans la cavité 105 au niveau des orifices CW et CCW, commandant le mouvement du piston 900 rotatif, donc les rotations de l'axe interne 400 et par conséquent des panneaux 3 ou volets de la tuyère, par rapport à une consigne de braquage souhaitée des panneaux ou volets de la tuyère secondaire selon la phase de vol, comme décrit par la suite.

Dans le même temps, alors que la tige 300 tourne et que sa translation reste bloquée par les segments 709, il entraîne en rotation la vis interne de synchronisation 500 de l'actionneur, qui fait tourner la roue 600 et la vis tangente de renvoi 504. Les arbres flexibles 15 tournent ainsi simultanément au cours de la rotation de la tige 300. Comme les actionneurs 1 et 1' (visible à la figure 5) sont commandés simultanément, les rotations de leur vis de renvoi 504 respective se comparent et se synchronisent par l'intermédiaire de l'arbre flexible 15, provoquant des rotations uniformes de tous les panneaux 3 ou volets de tuyère.

Comme indiqué précédemment, les arbres flexibles complémentaires 29 (visibles à la figure 5) peuvent être prévus pour synchroniser directement la rotation de la roue 11 du dispositif de renvoi de mouvement 4 en prise avec l'actionneur 1, avec une roue 11 du dispositif de renvoi de mouvement 4' en prise avec un actionneur adjacent 1', cela afin de permettre une redondance du passage d'effort en cas de panne de l'actionneur 1, une telle panne pouvant survenir notamment lors d'une rupture de l'arbre interne 400 de l'actionneur.

Ainsi, si l'actionneur 1 n'est pas alimenté, ou que l'axe interne 400 de l'actionneur est rompu, le volet 3' de l'actionneur adjacent 1' est toujours entraîné en rotation par l'intermédiaire de l'arbre flexible 29.

On se réfère à présent à la figure 4 représentant l'actionneur 1 dans une position selon laquelle la tige 300 a subi une translation.

A l'atterrissage, les panneaux de tuyère sont positionnés dans une position escamotée particulière extrême qui n'est plus régulée librement en position intermédiaire. Le maintien en position des panneaux de tuyère dans cette position extrême est assuré grâce à un réglage prédéterminé de la pression du fluide qui entre dans la cavité 105 du corps 100 par l'orifice CW, et/ou grâce au ressort 906 agissant en compression contre le piston, et/ou grâce à un pion de blocage et/ou grâce à un frein hydraulique à manque de pression. La rotation du piston 900 est ainsi bloquée, entraînant un blocage en translation de l'axe interne 400.

Lorsqu'une translation de la tige 300 vers l'aval de l'actionneur est souhaitée, la coiffe de guidage 707 est mue en translation par la pressurisation de la première chambre 107a par l'orifice D. Lorsque la première chambre 107a n'est pas pressurisée, les segments 709, sous l'effet de la traction de la tige 300 tendent à s'expanser du fait de la réaction du profil de la rampe 306. La présence de la coiffe de guidage 707 empêche l'écartement des segments, et la tige 300 reste verrouillée. Lors de la pressurisation de la première chambre 107a, la coiffe de guidage 707 est escamotée et la traction de la tige 300 produit une expulsion tangentielle des segments 709 qui quittent le contact avec la rampe 306, et libèrent ainsi le mouvement de la tige 300. Afin de faciliter l'escamotage de la coiffe, la pressurisation préalable de la deuxième chambre 107b par l'orifice S permet de ne pas forcer les segments 709 le long de la coiffe de guidage 707, ce qui permet ainsi d'éviter un phénomène de déverrouillage « sous charge ». Le système de verrouillage à segment ne peut, lorsqu'il est en position verrouillée, empêcher la rotation de la tige 300, soit parce que les angles de frottements et les réactions ne peuvent l'empêcher, soit à l'aide d'un dispositif de palier complémentaire (non représenté), qui permet la libre rotation du guidage des segments dans le corps, tout en empêchant sa translation.

Lorsque les segments 709 ont dégagé la rampe 306 du flasque 311 de la tige 300, le fluide pressurisé dans la chambre 107a de la cavité 107 du corps 100 par l'orifice D permet un déplacement en translation de la tige 300 vers l'aval de l'actionneur, de façon à ouvrir le capot d'inverseur. Le déplacement en translation de la tige 300 est autorisé tandis que le mouvement en rotation de la tige 300 est bloqué par les coulisseaux 405 de l'axe interne 400 qui engagent les rainures 301 de la tige, l'axe interne 400 étant bloqué en rotation grâce au maintien en position fixe du piston 900.

Le déplacement en translation de la tige 300 entraîne, grâce à l'écrou 303 de la tige, en prise avec les dentures 501 de la vis de synchronisation 500, la mise en rotation de la vis de synchronisation 500. La rotation de la vis de synchronisation 500 permet, via l'arbre flexible 15 entraîné par le système roue et vis sans fin 600, 504, une synchronisation des actionneurs reliés à cet arbre flexible.

Lorsque l'on souhaite déplacer la tige 300 vers l'amont de l'actionneur, le mouvement du piston 900 est bloqué par les moyens décrits ci-avant, ce qui permet d'interdire la rotation de l'axe interne 400. La tige 300 est déplacée en translation par introduction d'un fluide sous pression dans la chambre 107b, par le port S.

Lorsque la tige 300 regagne sa position de fermeture, elle comprime un piston suiveur (non représenté) qui maintenait les segments 709 en position relevée. Les segments poussés par la coiffe 707 comprimée par le ressort 706 sont désormais apte à glisser le long de la rampe 306 qui se sont positionnés en vis-à-vis au point de verrouillage lors de la fermeture de la tige 300. La coiffe 707 poussée par les ressorts 706 se positionne alors radialement de façon à bloquer à nouveau la capacité d'expansion des segments 709, finalisant la phase de verrouillage mécanique de l'ensemble de verrouillage à segments 700.

La figure 5 représente un dispositif de commande hydraulique 9 d'un ensemble d'actionneurs 1 et 1' de capot 5 d'inverseur et de panneaux 3, 3' de tuyère à section variable.

Le capot 5 est apte à être entraîné en translation par quatre actionneurs 1 et 1' hydraulique selon l'invention, et les panneaux 3, 3' ou volets de tuyère sont aptes à être entraînés en rotation par les actionneurs 1 et 1' respectivement par l'intermédiaire des dispositifs de renvoi de mouvement 4, 4'. Les actionneurs 1' sont synchronisés mécaniquement aux actionneurs 1 par les arbres flexibles 15. Cela permet aux actionneurs pilotés de transmettre leur mouvement à des actionneurs éventuellement défaillants. De même, les arbres flexibles complémentaires 29 permettent de synchroniser la rotation de la roue 11 du dispositif de renvoi de mouvement 4 en prise avec l'actionneur 1, avec la roue 11 du dispositif de renvoi de mouvement 4' en prise avec l'actionneur adjacent 1'. Ainsi, si l'actionneur 1 n'est pas alimenté, ou que l'axe interne 400 de l'actionneur est rompu, le volet 3' de l'actionneur adjacent 1' est entraîné en rotation par l'intermédiaire de l'arbre flexible 29.

Le capot 5 d'inverseur désigne deux demi-capots 5d, 5g, «d» et « g » désignant respectivement un demi-hémicycle droit et gauche de la nacelle. Alternativement, le capot d'inverseur peut aussi être un capot unique sensiblement périphérique à la nacelle, les quatre actionneurs 1 et 1' étant alors disposés par paire de chaque côté d'un axe longitudinal de la nacelle.

Le pilotage des actionneurs 1 et 1' est effectué par deux unités de pilotage 17d, 17g adaptées pour piloter les actionneurs 5 selon un mode de tuyère variable, et un ensemble d'unités de pilotage 19a et 19b adaptée pour piloter les actionneurs 1 et 1' selon un mode d'inversion de poussée.

Les unités de pilotage 17d, 17g et l'ensemble 19a, 19b sont connectés à une alimentation 21 en fluide sous pression ainsi qu'à un circuit 23 de retour du fluide sous pression. Idéalement, les unités 17d et 17g sont alimentées par des sources de pression distinctes de l'avion, afin de conserver au moins une paire d'actionneur alimenté en cas de défaillance d'un des deux circuits d'alimentation de l'avion. L'ensemble d'unité 19a et 19b peut en revanche être alimenté indifféremment par l'un de ces deux circuits.

Les unités de pilotage 17d, 17g selon un mode tuyère alimentent chacune parallèlement en fluide hydraulique une paire d'actionneurs 1 et 1'. Pour des raisons de sécurité, les actionneurs affectés à chaque unité de pilotage 17d, 17g sont croisés, c'est-à-dire que l'unité de pilotage 17d alimente un actionneur 1 positionné dans la partie droite de la nacelle et un actionneur 1 positionné dans la partie gauche de la nacelle. Il en va de même pour l'unité de pilotage 17g. Le schéma de la figure 5 représente une solution d'alimentation de deux paires d'actionneur, mais peut être étendu de la même façon à trois actionneurs par capot, régulés par un partage d'alimentation, l'un des actionneurs étant piloté par l'unité de pilotage 17d, et les deux autres actionneurs étant pilotés par l'unité de pilotage 17g, et inversement sur l'autre capot d'inverseur.

Chaque unité de pilotage 17d, 17g comprend une servovalve 25 à trois voies et une vanne d'isolation d'alimentation 27 à commande électrique. Préférentiellement, la vanne d'isolation 27 est toujours mise sous tension tandis que la servovalve 25 est régulée uniquement dans le mode d'alimentation tuyère. En cas de phénomène d'« embarquement » suite à une dérive de la servovalve 25, la pressurisation des orifices CW et CCW de l'actionneur provoque une mise en rotation impromptue des panneaux 3 ou volets, détectée par le capteur RVDT de l'axe interne 400 rotatif. Le contrôleur coupe alors la vanne de pressurisation et l'actionneur est laissé en position libre, poussé par le ressort 906 vers sa position de repli. Néanmoins la régulation permet que les actionneurs adjacents alimentés par l'autre unité de pilotage 17g puissent entraîner les actionneurs dépressurisés grâce aux arbres flexibles principaux 15 et grâce aux arbres flexibles complémentaires 29 optionnels positionnés au niveau du dispositif de renvoi de mouvement 4.

L'unité de régulation qui réalise ce contrôle est préférentiellement le FADEC (acronyme anglo-saxon de « Full Authority Digital Engine Control »), non représenté sur les figures, prévu pour le contrôle moteur qui dispose d'entrée et de sortie de conditionnements de mesure RVDT, de capteurs de pression, d'alimentation d'électrovanne de pressurisation, de moteur couple proportionnel, aptes à alimenter une servovalve similaire pour le contrôle des géométries d'alimentation de carburant ou d'air du turboréacteur. Le FADEC est traditionnellement partitionné en deux voies distinctes alimentées et contrôlées séparément en parallèle ou en maitre-esclave, et est donc entièrement prédisposé pour ce type de régulations à deux voies d'un tel système. La servovalve 25 est une servovalve à trois voies adaptée, lorsque le piston 900 est à section différentielle entre les orifices CW et CCW, tel que présenté précédemment. Dans ce cas, la section réduite alimentée par l'orifice CW est directement alimentée par la pression en aval de la vanne d'isolation 27, tandis que la section la plus grande alimentée par le port CCW est modulée par la servovalve 25, qui recharge ou décharge la pression de la chambre en fonction de la position angulaire des panneaux ou volets 3, 3', par rapport à une consigne.

Alternativement lorsque le piston 900 rotatif présente des sections identiques, la servovalve 25 peut être remplacée par une servovalve de type quatre voies, permettant de moduler proportionnellement les deux chambres de l'actionneur, c'est à dire que la pression augmente dans une des chambres et diminue proportionnellement dans l'autre, en fonction du courant de commande de la servovalve.

Alternativement, on peut munir les sorties des servovalves alimentant les orifices CW et CCW des actionneurs avec des soupapes antichocs de sécurité 31, ce qui permet d'écrêter les pics de pression induits par des surcharges d'efforts aérodynamiques momentanées dans le panneau 3, 3'.

Alternativement si la finesse du besoin de régulation n'est pas exigeante, et/ou si les besoins de déplacement des panneaux ou volets est intermittent et séquentiel, on peut remplacer les servovalves 25 par des électrovannes de commandes et équiper l'actionneur de systèmes de blocage du piston 900 rotatif d'un frein hydraulique à manque de pression, d'un doigt d'engagement ou d'autres dispositifs d'immobilisation connus de l'homme du métier.

Alternativement, si l'on souhaite positionner les panneaux ou volets 3, 3' dans une position ouverte ou dans une position fermée, sans autre position intermédiaire, on peut remplacer les servovalves 25 par des électrovannes « tout ou rien » ou « ON/OFF » connues de l'homme du métier, qui pressurisent la cavité 105 de l'actionneur par l'orifice CW ou par l'orifice CCW du piston 900 rotatif.

Dans l'ensemble des modes de réalisation du contrôle des panneaux ou volets de tuyère qui viennent d'être décrits, on conserve la capacité de synchroniser les panneaux 3, 3' ou volets de tuyère entre eux et la capacité de faire face à la perte d'une alimentation hydraulique ou d'une rupture simple de la chaîne de transmission, telle qu'une rupture de l'arbre du piston 900 rotatif, grâce à :
- une alimentation partagée par deux unités de pilotage distinctes 17d et 17g, et/ou
- une répartition d'alimentation des paires d'actionneurs 1 et 1' sur un capot 5 donné, et/ou
- la rétroaction d'entrainement mécanique par les arbres flexibles de synchronisation 15 et par les arbres flexibles complémentaires 29.

Comme il va de soi, la présente invention ne se limite pas aux seules formes de réalisation de cette nacelle comportant un tel système d'actionnement des actionneurs, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Nacelle pour turboréacteur d'aéronef, comprenant :
- un inverseur de poussée, comprenant :
• un capot (5) déplaçable entre une position déployée qui ouvre dans la nacelle un passage destiné à un flux d'air dévié et une position d'escamotage qui ferme ce passage ;
• une structure fixe (7) relativement audit capot (5) ;
- une tuyère secondaire à section variable comprenant une pluralité de panneaux (3, 3') ou volets mobiles en rotation,
- une pluralité d'actionneurs (1, 1') hydrauliques pour actionnement séquencé dudit capot (5) et desdits panneaux (3, 3'), comprenant :
• un corps (100) monté sur ladite structure fixe (7), et
• une tige (300) montée dans ledit corps (100) et reliée, d'une part, audit capot (5) et, d'autre part, auxdits panneaux (3, 3') par l'intermédiaire d'un dispositif de renvoi de mouvement (4, 4') de l'actionneur (1,1') au panneau (3, 3') ;
- au moins un système d'actionnement alimentant ledit actionneur (1, 1'), comprenant un dispositif de commande hydraulique (9) dudit actionneur adapté pour commander le déplacement de la tige (300) de l'actionneur ; ledit actionneur (1, 1') comprenant des moyens pour déplacer la tige (300) alternativement en translation par rapport audit corps (100), de façon à entraîner la translation du capot (5) d'inverseur de poussée, ou en rotation par rapport audit corps (100), de façon à entraîner la rotation du panneau (3) ou volet de tuyère secondaire.

2. Nacelle selon la revendication 1, **caractérisée en ce que** l'actionneur (1) comprend des moyens adaptés pour renvoyer le mouvement de translation et de rotation de la tige (300) dudit actionneur à un actionneur externe audit actionneur (1), de façon synchronisée.

3. Nacelle selon l'une des revendications 1 ou 2, **caractérisée en ce que** les moyens de l'actionneur (1) pour déplacer la tige (300) en rotation comprennent :
- une rainure (301) longitudinale agencée à l'intérieur de la tige (300) ;
- un axe interne (400) rotatif, bloqué en translation par rapport au corps (100), et comprenant un coulisseau (405) engageant ladite rainure (301) ;
- des moyens de mise en rotation dudit axe interne (400).

4. Nacelle selon la revendication 3, **caractérisée en ce que** les moyens de mise en rotation de l'axe interne (400) comprennent :
- un piston (900) rotatif, en prise avec ledit axe interne (400) ;
- des moyens de mise en rotation dudit piston (900).

5. Nacelle selon la revendication 4, **caractérisée en ce que** les moyens de mise en rotation du piston (900) comprennent :
- un premier ensemble de dentures (901), agencées à l'extérieur du piston (900) ;
- un ensemble de dentures (101), agencées à l'intérieur du corps (100), et en prise avec les dentures (901) du piston (900) ;
- une pluralité d'orifices (CW, CCW) d'introduction d'un fluide, agencés dans ledit corps (100), de part et d'autre dudit piston (900) ;
et **en ce que** le piston (900) est en prise avec ledit axe interne (400) grâce à un deuxième ensemble de dentures (902), agencées à l'intérieur du piston (900), et en prise avec un ensemble de dentures (402), agencées à l'extérieur de l'axe interne (400).

6. Nacelle selon la revendication 5, **caractérisée en ce que** les dentures (101, 402, 901, 902) sont des dentures hélicoïdales à pas simples ou multiples.

7. Nacelle selon la revendication 5, **caractérisée en ce que** les dentures (901, 902) sont des dentures hélicoïdales à pas inversé.

8. Nacelle selon l'une des revendications 5 ou 6, **caractérisée en ce que** l'actionneur (1) comprend en outre un ressort (906) agencé pour s'opposer au déplacement du piston (900) selon un des sens de déplacement dudit piston.

9. Nacelle selon l'une quelconque des revendications 2 à 8, **caractérisée en ce que** les moyens pour renvoyer le mouvement de translation et de rotation de la tige (300) de l'actionneur, à un actionneur externe audit actionneur, comprennent :
- une vis de synchronisation (500), comprenant un ensemble de dentures (501), agencées à l'extérieur de ladite vis (500) ;
- un écrou (303), monté à l'intérieur de la tige (300), et en prise avec l'ensemble de dentures (501) de ladite vis (500) ;
- un système roue et vis sans fin (504, 600) adapté pour recevoir un système d'arbre flexible destiné à relier le système roue et vis sans fin (504, 600) de l'actionneur à un système roue et vis sans fin dudit dispositif externe audit actionneur;
- un ensemble de paliers rotatifs (503), supportant ladite vis, lesdits paliers étant agencés de part et d'autre dudit système roue et vis sans fin (504, 600), de façon à bloquer en translation la vis de synchronisation (500) par rapport au corps (100) de l'actionneur.

10. Nacelle selon l'une quelconque des revendications 1 à 9, **caractérisée en ce que** le système d'actionnement comprend :
- une alimentation hydraulique (21) doublée par des circuits d'alimentation hydraulique, et
- des unités de pilotage (17d, 17g) alimentant des actionneurs adjacents (1, 1') d'un capot (5) d'inverseur, pour entraîner la rotation de la tige (300) de l'actionneur (1, 1').

11. Nacelle selon la revendication 10, **caractérisée en ce que** les unités de pilotage (17d, 17g) du système d'actionnement comprennent une servovalve (25) à trois voies alimentant le corps de l'actionneur par l'orifice (CW) et une vanne d'isolation (27) alimentant le corps de l'actionneur par l'orifice (CCW).

12. Nacelle selon la revendication 10, **caractérisée en ce que** les unités de pilotage (17d, 17g) du système d'actionnement sont équipées de servovalve à quatre voies.

13. Nacelle selon la revendication 10 **caractérisée en ce que** les unités de pilotage (17d, 17g) du système d'actionnement sont équipées d'électrovannes « tout ou rien » aptes à pressuriser l'actionneur (1) via l'orifice (CW) ou l'orifice (CCW).

14. Nacelle selon l'une quelconque des revendications 1 à 13, **caractérisée en ce que** le système d'actionnement comprend au moins une soupape antichoc de sécurité (31), permettant de décharger les pressions induites par des efforts indésirables des panneaux ou volets de tuyère.

15. Nacelle selon l'une quelconque des revendications 1 à 14, **caractérisée en ce qu'**elle comprend un arbre flexible (15) relié entre un premier actionneur (1) du capot d'inverseur, et un deuxième actionneur (1') dudit capot, adjacent audit premier actionneur (1), agencé pour synchroniser le mouvement de translation et de rotation de la tige (300) du premier actionneur (1) avec celui du deuxième actionneur (1').

16. Nacelle selon la revendication 15, **caractérisée en ce qu'**elle comprend un arbre flexible complémentaire (29) reliant :
- le dispositif de renvoi de mouvement (4) du premier actionneur (1) au panneau de tuyère (3), et
- le dispositif de renvoi de mouvement (4') du deuxième actionneur (1') au panneau de tuyère (3'),
ledit arbre flexible complémentaire étant agencé pour synchroniser le mouvement du dispositif de renvoi de mouvement (4) avec celui du dispositif de renvoi de mouvement (4').

## Patentansprüche

1. Gondel für Flugzeugturbodüsenmotor, umfassend:
- eine Schubumkehr, umfassend:
-- eine Abdeckung (5), die zwischen einer entfalteten Position, die in der Gondel einen Durchgang öffnet, der für einen abgelenkten Luftstrom bestimmt ist, und einer zusammengeklappten Position, die diesen Durchgang schließt, verlagerbar ist;
-- eine relativ zu der Abdeckung (5) feste Struktur (7);
- eine sekundäre Düse mit variablem Querschnitt, umfassend eine Vielzahl rotierend beweglicher Platten (3, 3') oder Klappen,
- eine Vielzahl hydraulischer Aktuatoren (1, 1') für die sequenzierte Betätigung der Abdeckung (5) und der Platten (3, 3'), umfassend:
-- einen auf der festen Struktur (7) angebrachten Körper (100), und
-- eine Stange (300), die in dem Körper (100) angebracht ist und zum einen mit der Abdeckung (5) und zum anderen mit den Platten (3, 3') über eine Vorrichtung zum Umlenken der Bewegung (4, 4') vom Aktuator (1, 1') zu der Platte (3, 3') verbunden ist;
- mindestens ein Betätigungssystem, welches den Aktuator (1, 1') versorgt, umfassend eine hydraulische Steuervorrichtung (9) des Aktuators, die zum Steuern der Verlagerung der Stange (300) des Aktuators geeignet ist;
wobei der Aktuator (1, 1') Mittel umfasst, um die Stange (300) alternativ translatorisch in Bezug auf den Körper (100) derart zu verlagern, dass die Translation der Abdeckung (5) der Schubumkehr bewirkt wird, oder rotatorisch in Bezug auf den Körper (100) derart, dass die Rotation der Platte (3) oder Klappe einer sekundären Düse bewirkt wird.

2. Gondel nach Anspruch 1, **dadurch gekennzeichnet, dass** der Aktuator (1) Mittel umfasst, die zum synchronisierten Umlenken der Translations- und Rotationsbewegung der Stange (300) des Aktuators an einen zu dem Aktuator (1) externen Aktuator geeignet ist.

3. Gondel nach einem der Ansprüche 1 oder 2, **dadurch gekennzeichnet, dass** die Mittel des Aktuators (1) zur Rotationsverlagerung der Stange (300) umfassen:
- eine Längsrille (301), die im Inneren der Stange (300) eingerichtet ist;
- eine innere Rotationsachse (400), die translatorisch in Bezug auf den Körper (100) blockiert ist und ein Gleitstück (405) umfasst, welches in die Rille (301) eingreift;
- Mittel zum Inrotationversetzen der inneren Achse (400).

4. Gondel nach Anspruch 3, **dadurch gekennzeichnet, dass** die Mittel zum Inrotationversetzen der inneren Achse (400) umfassen:
- einen rotierenden Kolben (900) im Eingriff mit der inneren Achse (400);
- Mittel zum Inrotationversetzen des Kolbens (900).

5. Gondel nach Anspruch 4, **dadurch gekennzeichnet, dass** die Mittel zum Inrotationversetzen des Kolbens (900) umfassen:
- eine erste Gruppe von Zähnen (901), die außerhalb des Kolbens (900) eingerichtet sind;
- eine Gruppe von Zähnen (101), die innerhalb des Körpers (100) eingerichtet und im Eingriff mit den Zähnen (901) des Kolbens (900) sind;
- eine Vielzahl von Öffnungen (CW, CCW) für die Einleitung eines Fluids, die in dem Körper (100) beiderseits des Kolbens (900) eingerichtet sind;
und dadurch, dass der Kolben (900) mit der inneren Achse (400) dank einer zweiten Gruppe von Zähnen (902) im Eingriff ist, die innerhalb des Kolbens (900) eingerichtet und im Eingriff mit einer Gruppe von Zähnen (402) sind, die außerhalb der inneren Achse (400) eingerichtet sind.

6. Gondel nach Anspruch 5, **dadurch gekennzeichnet, dass** die Zähne (101, 402, 901, 902) spiralige Zähne mit einfachen oder mehrfachen Steigungen sind.

7. Gondel nach Anspruch 5, **dadurch gekennzeichnet, dass** die Zähne (901, 902) spiralige Zähne mit umgekehrter Steigung sind.

8. Gondel nach einem der Ansprüche 5 oder 6, **dadurch gekennzeichnet, dass** der Aktuator (1) ferner eine Feder (906) umfasst, die eingerichtet ist, um der Verlagerung des Kolbens (900) gemäß einer der Verlagerungsrichtungen des Kolbens entgegenzuwirken.

9. Gondel nach einem der Ansprüche 2 bis 8, **dadurch gekennzeichnet, dass** die Mittel zum Umlenken der Translations- und Rotationsbewegung der Stange (300) des Aktuators an einen zu dem Aktuator externen Aktuator umfassen:
- eine Synchronisierungsschraube (500), umfassend eine Gruppe von Zähnen (501), die außerhalb der Schraube (500) eingerichtet sind;
- eine Mutter (303), die innerhalb der Stange (300) angebracht und im Eingriff mit der Gruppe von Zähnen (501) der Schraube (500) ist;
- ein Rad-Schnecken-System (504, 600), das für die Aufnahme eines flexiblen Wellensystems geeignet ist, das zur Verbindung des Rad-Schnecken-Systems (504, 600) des Aktuators mit einem Rad-Schnecken-System der zu dem Aktuator externen Vorrichtung bestimmt ist;
- eine Einheit rotierender Lager (503), welche die Schraube tragen, wobei die Lager beiderseits des Rad-Schnecken-Systems (504, 600) derart eingerichtet sind, dass die Synchronisierungsschraube (500) in Bezug auf den Körper (100) des Aktuators translatorisch blockiert wird.

10. Gondel nach einem der Ansprüche 1 bis 9, **dadurch gekennzeichnet, dass** das Betätigungssystem umfasst:
- eine hydraulische Versorgung (21), die von hydraulischen Versorgungskreisen verdoppelt wird, und
- Steuereinheiten (17d, 17g), die benachbarte Aktuatoren (1, 1') einer Umkehrabdeckung (5) versorgen, um die Rotation der Stange (300) des Aktuators (1, 1') zu bewirken.

11. Gondel nach Anspruch 10, **dadurch gekennzeichnet, dass** die Steuereinheiten (17d, 17g) des Betätigungssystems ein Dreiwege-Servoventil (25) umfassen, welches den Körper des Aktuators durch die Öffnung (CW) versorgt, und ein Isolierventil (27), welches den Körper des Aktuators durch die Öffnung (CCW) versorgt.

12. Gondel nach Anspruch 10, **dadurch gekennzeichnet, dass** die Steuereinheiten (17d, 17g) des Betätigungssystems mit Vierwege-Servoventilen ausgestattet sind.

13. Gondel nach Anspruch 10, **dadurch gekennzeichnet, dass** die Steuereinheiten (17d, 17g) des Betätigungssystems mit Alles-oder-Nichts-Elektroventilen ausgestattet sind, die imstande sind, den Aktuator (1) über die Öffnung (CW) oder die Öffnung (CCW) unter Druck zu setzen.

14. Gondel nach einem der Ansprüche 1 bis 13, **dadurch gekennzeichnet, dass** das Betätigungssystem mindestens ein Stoßsicherungsventil (31) umfasst, das erlaubt, die von den unerwünschten Kräften der Düsenplatten oder -klappen induzierten Drücke abzulassen.

15. Gondel nach einem der Ansprüche 1 bis 14, **dadurch gekennzeichnet, dass** sie eine flexible Welle (15) umfasst, die zwischen einem ersten Aktuator (1) der Umkehrabdeckung und einem zweiten Aktuator (1') der Abdeckung neben dem ersten Aktuator (1) verbunden ist, die eingerichtet ist, um die Translations- und Rotationsbewegung der Stange (300) des ersten Aktuators (1) mit der des zweiten Aktuators (1') zu synchronisieren.

16. Gondel nach Anspruch 15, **dadurch gekennzeichnet, dass** sie eine komplementäre flexible Welle (29) umfasst, die verbindet:
- die Vorrichtung zum Umlenken der Bewegung (4) des ersten Aktuators (1) zur Düsenplatte (3), und
- die Vorrichtung zum Umlenken der Bewegung (4') des zweiten Aktuators (1') zur Düsenplatte (3'),
wobei die komplementäre flexible Welle eingerichtet ist, um die Bewegung der Vorrichtung zum Umlenken der Bewegung (4) mit der der Vorrichtung zum Umlenken der Bewegung (4') zu synchronisieren.

## Claims

1. A nacelle for an aircraft turbojet engine, comprising:
- a thrust reverser, comprising:
• a cowl (5) displaceable between a deployed position which opens in the nacelle a passage intended for a diverted air flow and a retracted position which closes the passage;
• a fixed structure (7) relative to said cowl (5);
- a secondary nozzle with a variable section comprising a plurality of panels (3,3') or flaps movable in rotation,
- a plurality of hydraulic actuators (1,1') for sequentially actuating said cowl (5) and said panels (3,3'), comprising:
• a body (100) mounted on said fixed structure (7), and
• a rod (300) mounted in said body (100) and connected, on the one hand, to said cowl (5) and, on the other hand, to said panels (3,3') by means of a device (4,4') for transmitting movement from the actuator (1,1') to the panel (3,3');
- at least one actuation system powering said actuator (1,1'), comprising a hydraulic control device (9) of said actuator adapted to control the displacement of the rod (300) of the actuator;
said actuator (1,1') comprising means for displacing the rod (300) alternately in translation relative to said body (100), so as to cause the translation of the thrust reverser cowl (5), or in rotation relative to said body (100), so as to cause rotation of the panel (3) or secondary nozzle flap.

2. The nacelle according to claim 1, **characterized in that** the actuator (1) comprises means adapted to transmit the translational and rotational movement of the rod (300) from said actuator to an actuator external to said actuator (1), synchronously.

3. The nacelle according to any of claims 1 or 2, **characterized in that** the means of the actuator (1) for displacing the rod (300) in rotation comprise:
- a longitudinal groove (301) arranged inside the rod (300);
- a rotary inner axis (400), blocked in translation relative to the body (100), and comprising a slider (405) engaging said groove (301);
- means for rotating said inner axis (400).

4. The nacelle according to claim 3, **characterized in that** the means for rotating the inner axis (400) comprise:
- a rotary piston (900) engaged with said inner axis (400);
- means for rotating said piston (900).

5. The nacelle according to claim 4, **characterized in that** the means for rotating the piston (900) comprise:
- a first set of teeth (901), arranged outside the piston (900);
- a set of teeth (101), arranged inside the body (100), and engaged with the teeth (901) of the piston (900);
- a plurality of fluid introduction orifices (CW, CCW) arranged in said body (100), on either side of said piston (900);
and **in that** the piston (900) is engaged with said inner axis (400) thanks to a second set of teeth (902), arranged inside the piston (900), and engaged with a set of teeth (402), arranged outside the inner axis (400).

6. The nacelle according to claim 5, **characterized in that** the teeth (101, 402, 901, 902) are helical teeth with single or multiple pitch.

7. The nacelle according to claim 5, **characterized in that** the teeth (901, 902) are helical teeth with reverse pitch.

8. The nacelle according to any of claims 5 or 6, **characterized in that** the actuator (1) further comprises a spring (906) arranged to oppose the displacement of the piston (900) in one of the directions of displacement of said piston.

9. The nacelle according to any one of claims 2 to 8, **characterized in that** the means for transmitting the translational and rotational movement of the rod (300) of the actuator, to an actuator external to said actuator, comprise:
- a synchronization screw (500), comprising a set of teeth (501), arranged outside said screw (500);
- a nut (303), mounted inside the rod (300), and engaged with the set of teeth (501) of said screw (500);
- a wheel and worm system (504, 600) adapted to receive a flexible shaft system intended to connect the wheel and worm system (504, 600) of the actuator to a wheel and worm system of said device external to said actuator;
- a set of rotary bearings (503), supporting said screw, said bearings being arranged on either side of said wheel and worm system (504, 600), so as to block in translation the synchronization screw (500) relative to the body (100) of the actuator.

10. The nacelle according to any one of claims 1 to 9, **characterized in that** the actuating system comprises:
- a hydraulic supply (21) doubled by hydraulic supply circuits, and
- control units (17d, 17g) powering adjacent actuators (1, 1') of a thrust reverser cowl (5), to cause rotation of the rod (300) of the actuator (1, 1').

11. The nacelle according to claim 10, **characterized in that** the control units (17d, 17g) of the actuation system comprise a three-way servovalve (25) supplying the body of the actuator through the orifice (CW) and an isolation valve (27) supplying the body of the actuator through the orifice (CCW).

12. The nacelle according to claim 10, **characterized in that** the control units (17d, 17g) of the actuation system are equipped with a four-way servovalve.

13. The nacelle according to claim 10 **characterized in that** the control units (17d, 17g) of the actuation system are equipped with "all or nothing" solenoid valves adapted to pressurize the actuator (1) via the orifice (CW) or the orifice (CCW).

14. The nacelle according to any one of claims 1 to 13, **characterized in that** the actuation system comprises at least one safety anti-shock plug (31), for discharging the pressures induced by undesirable forces of the panels or nozzle flaps.

15. The nacelle according to any one of claims 1 to 14, **characterized in that** it comprises a flexible shaft (15) connected between a first actuator (1) of the thrust reverser cowl, and a second actuator (1') of said cowl, adjacent to said first actuator (1), arranged to synchronize the translational and rotational movement of the rod (300) of the first actuator (1) with that of the second actuator (1').

16. The nacelle according to claim 15, **characterized in that** it comprises a complementary flexible shaft (29) connecting:
- the device (4) for transmitting movement of the first actuator (1) to the nozzle panel (3), and
- the device (4') for transmitting movement of the second actuator (1') to the nozzle panel (3'),
said complementary flexible shaft being arranged to synchronize the movement of the movement transmission device (4) with that of the movement transmission device (4').
